(19) Europäisches Patentamt
European Patent Office
Office européen des brevets

(11) Veröffentlichungsnummer : **0 329 741 B1**

(12) **EUROPÄISCHE PATENTSCHRIFT**

(45) Veröffentlichungstag der Patentschrift :
**16.12.92 Patentblatt 92/51**

(51) Int. Cl.$^5$ : **F16H 3/72, F16H 37/08**

(21) Anmeldenummer : **88907219.5**

(22) Anmeldetag : **29.08.88**

(86) Internationale Anmeldenummer :
**PCT/CH88/00149**

(87) Internationale Veröffentlichungsnummer :
**WO 89/02550 23.03.89 Gazette 89/07**

(54) **STUFENLOS REGELBARER ANTRIEB.**

(30) Priorität : **09.09.87 CH 3479/87**

(43) Veröffentlichungstag der Anmeldung :
**30.08.89 Patentblatt 89/35**

(45) Bekanntmachung des Hinweises auf die
Patenterteilung :
**16.12.92 Patentblatt 92/51**

(84) Benannte Vertragsstaaten :
**AT CH DE FR GB IT LI SE**

(56) Entgegenhaltungen :
**DE-A- 2 415 859**
**GB-A- 272 206**
**GB-A- 735 147**
**US-A- 4 109 550**

(73) Patentinhaber : **FREY, Heinz**
**Hirtenhofstrasse 18**
**CH-6005 Luzern (CH)**

(72) Erfinder : **FREY, Heinz**
**Hirtenhofstrasse 18**
**CH-6005 Luzern (CH)**

(74) Vertreter : **Münch, Otto et al**
**Patentanwalts-Bureau Isler AG Postfach 6940**
**CH-8023 Zürich (CH)**

EP 0 329 741 B1

## Beschreibung

Ein stufenlos regelbarer Antrieb gemäss Oberbegriff des Anspruchs 1 ist aus dem US-A-4 109 550 bekannt. Ein Fahrzeugmotor treibt über eine Antriebswelle ein Sonnenrad eines Planeten-Differentialgetriebes. Mit dem Sonnenrad und einem koaxialen Hohlrad kämmen Planetenräder, die in einem ebenfalls koaxialen Käfig drehbar gelagert sind. Der Käfig ist starr mit der Abtriebswelle des Getriebes verbunden. Das Hohlrad ist über ein stufenlos regelbares Reibradgetriebe und ein Schneckengetriebe mit der Antriebswelle verbunden. Bei gleichbleibender Drehrichtung der Antriebswelle kann über das Reibradgetriebe das Hohlrad in beiden Drehrichtungen angetrieben oder gebremst werden. Bei dieser Ausbildung wird ein beträchtlicher Teil der Leistung über das Reibradgetriebe und das Schneckengetriebe übertragen. Dies erfordert eine massive Ausbildung des Reibradgetriebes sowie steile Flankenwinkel der Schneckenzähne.

Der Erfindung liegt die Aufgabe zugrunde, einen Antrieb der eingangs genannten Art derart weiterzubilden, dass die Drehzahl der Abtriebswelle in einem weiten Bereich mit geringer Leistung des drehzahlregelbaren Gliedes geregelt werden kann. Diese Aufgabe wird durch die kennzeichnenden Merkmale des Anspruchs 1 gelöst.

Bei formalen Schneckengetrieben ist das Verhältnis von Schneckendurchmesser zu Schneckenraddurchmesser wesentlich unter 0,4, weil sonst der Wirkungsgrad zu schlecht ist. In der erfindungsgemässen Anwendung bringt jedoch die Wahl einer grossen Schnecke entscheidende Vorteile: a) Das Untersetzungsverhältnis des Schneckengetriebes wird kleiner und dadurch kann mit dem gleichen Drehzahlbereich des drehzahlregelbaren Gliedes ein grösserer Drehzahlbereich der Abtriebswelle erreicht werden; b) Es hat sich überraschenderweise gezeigt, dass bei konstantem Drehmoment des Schneckenrades das Drehmoment der Schnecke bei grossem Schneckendurchmesser bedeutend weniger drehzahlabhängig ist als bei kleinem Schneckendurchmesser. Damit kann mit einer sehr geringen leistung des drehzahlregelbaren Gliedes eine grosse Abtriebsleistung geregelt werden.

Der Steigungswinkel der Schneckenzähne ist so gewählt, dass das Schneckengetriebe bei laufender Schnecke gerade noch nicht selbsthemmend ist. Das drehzahlregelbare Glied wirkt deshalb hauptsächlich als Bremse. Dabei ist das Schneckengetriebe gegenüber normalen Schneckengetrieben "verkehrt" eingesetzt, indem das Schneckenrad auf der Antriebsseite, die Schnecke hingegen auf der Abtriebsseite sitzt. In dieser "verkehrten" Anordnung hat das Schneckengetriebe einen sehr schlechten Wirkungsgrad, so dass die zu regelnde Bremsleistung des drehzahlregelbaren Gliedes nur wenige Prozente der Antriebsleistung des Antriebsmotors beträgt.

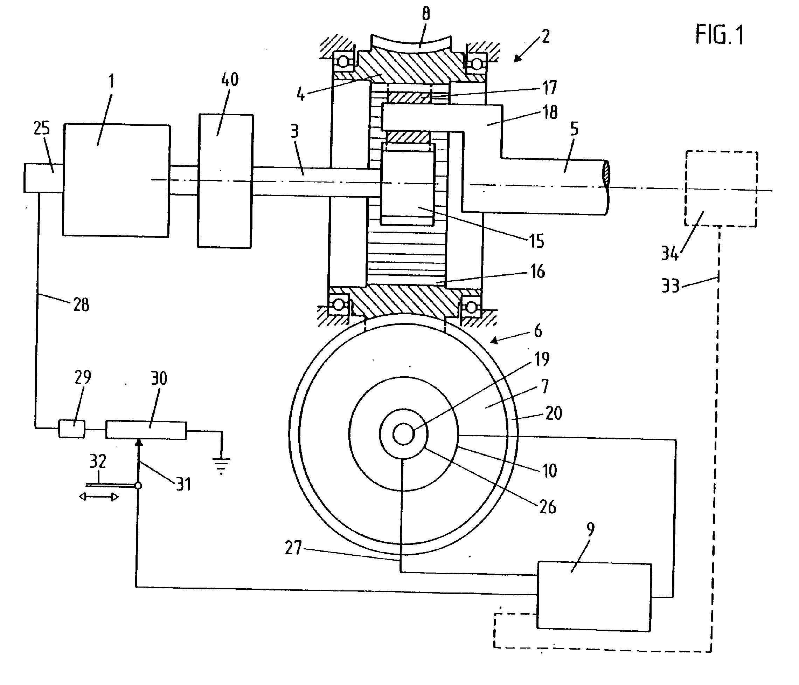

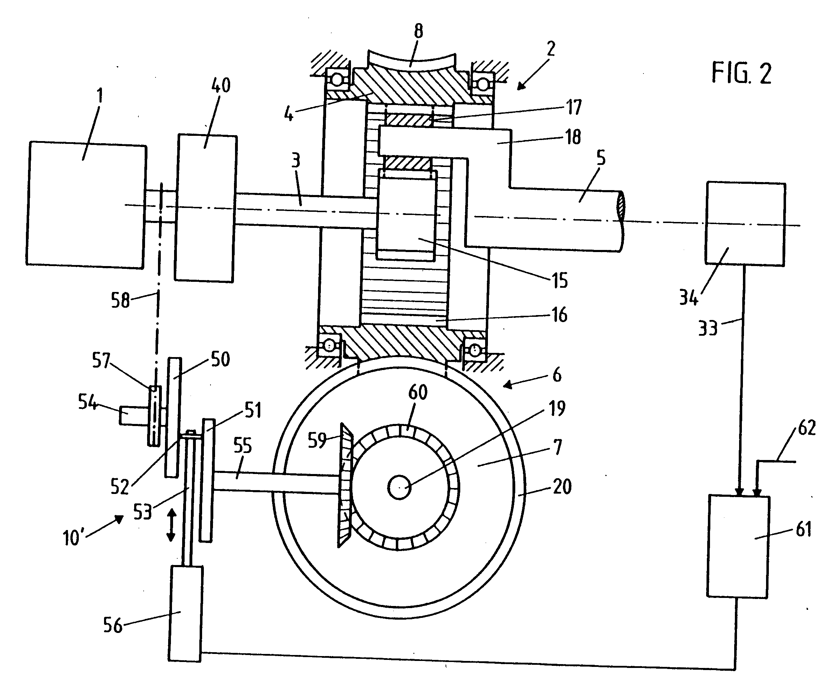

Nachfolgend wird ein Ausführungsbeispiel der Erfindung anhand der Zeichnung erläutert. Darin zeigt Fig. 1 schematisch eine erste Ausführungsform und Fig. 2 eine zweite Ausführungsform.

Der Antrieb nach Fig. 1 besteht aus einem Antriebsmotor 1, einem Differentialgetriebe 2 mit zwei Eingangswellen 3, 4 und einer Abtriebswelle 5, einem Schneckengetriebe 6 mit einer Schnecke 7 und einem mit der Welle 4 verbundenen Schneckenrad 8, sowie einem durch einen Regler 9 geregelten Servomotor 10. Das Differentialgetriebe 2 ist ein Planetengetriebe und hat ein auf der Welle 3 sitzendes Sonnenrad 15, einen koaxialen, mit der Welle 4 verbundenen Zahnkranz 16 sowie über dem Umfang verteilte Planetenräder 17, von denen nur eines dargestellt ist und die mit dem Sonnenrad 15 und dem Zahnkranz 16 kämmen. Die Planetenräder 17 sind auf einem Planetenträger 18 drehbar gelagert. Der Planetenträger 18 ist starr mit der Welle 15 verbunden.

Die Schnecke 7 sitzt auf der Ausgangswelle 19 des Servomotors 10. Die Zähne 20 der Schnecke 7 haben eine Steigung zwischen ca. 5° und ca. 9°, vorzugsweise etwa 7°. Der Antriebsmotor 1 hat einen Drehzahlgeber 25 und der Servomotor einen weiteren Drehzahlgeber 26. Der Ausgang 27 des Gebers 26 wird auf den Regler 9 aufgeschaltet. Der Ausgang 28 des Gebers 25 ist als Störgrösse über einen Vorwiderstand 29 an ein Potentiometer 30 angeschlossen, dessen andere Seite geerdet ist. Der Abgriff 31 des Potentiometers 30 wird dem Regler 9 als Sollwert zugeführt. Im dargestellten Beispiel ist der Abgriff 31 durch ein manuell betätigtes Glied 32 einstellbar. Der Ausgang des Reglers 9 ist mit dem Servomotor 10 verbunden. Zusätzlich oder anstelle der Störgrössenaufschaltung über den Geber 25 kann dem Regler 9 noch ein Signal 33 eines weiteren Gebers 34 eingegeben werden, der mit der Abtriebswelle 5 verbunden ist. Je nach Art der gewünschten Regelung kann der Geber 34 die Drehzahl oder den Drehwinkel der Abtriebswelle 5 messen.

Im Betrieb dreht der Motor 1 mit einer im wesentlichen konstanten aber ungeregelten Drehzahl. Solange die Welle 4 stillsteht, wird die Abtriebswelle 5 mit einem Untersetzungsverhältnis angetrieben, dass durch die Durchmesser des Sonnenrades 15, des Zahnkranzes 16 und der Planetenräder 17 bestimmt ist. Das Antriebsdrehmoment bewirkt ein Drehmoment auf die Welle 4 und somit das Schneckenrad 8 entgegen der Drehrichtung der Welle 3. Wird nun die Schnecke 7 in dem Sinne gedreht, dass die Welle 4 in Richtung des auf sie wirkenden Drehmomentes umläuft, so wird die Drehzahl der Abtriebswelle 5 reduziert.

Da das Schneckengetriebe 6 beinahe selbsthemmend ist, wird dabei nur ein sehr geringes Drehmoment im antreibenden Sinne auf die Schnecke 7 übertragen. Der Servomotor 10 wirkt vorwiegend als Bremse. Der Regler 9 regelt die Drehzahl der Schnecke 7 über den Servomotor 10 auf den am Glied 32 eingegebenen Sollwert. Wird das Abtriebsdrehmoment an der Welle 5 erhöht, so erhöht sich unmittelbar auch das vom Motor 1 aufzubringende Drehmoment. Da dieser Motor 1 nicht geregelt ist, sinkt damit auch die Drehzahl der Welle 3. Durch den Geber 25 wird diese Aenderung erfasst und über das Potentiometer 30 und den Abgriff 31 dem Regler 9 eingegeben, so dass auch die Schnecke 7 langsamer dreht. Die Störgrössenaufschaltung ist so ausgelegt, dass die Drehzahl der Abtriebswelle 5 unabhängig ist von der Grösse des Abtriebsdrehmomentes. Wenn der Servomotor 10 so schnell dreht, dass das Sonnenrad 15 und der Zahnkranz 16 gleiche Umfangsgeschwindigkeiten haben, so steht die Welle 5 still. Dreht der Zahnkranz 16 schneller, so läuft die Welle 5 rückwärts. Dies ist allerdings bei gleichbleibend geringer Leistung des Servomotors 10 nur dann möglich, wenn das Abtriebsdrehmoment im gleichen, ursprünglichen Drehsinn wirkt. Beispiele für solche Anwendungen sind Kräne, Winden oder Aufzüge. In diesen Anwendungsfällen ist es zweckmässig, den Antriebsmotor 1 und den Servomotor 10 als Stoppmotoren auszubilden. Solche Stoppmotoren haben eine Bremse, die beim Abschalten der Stromzufuhr die Motorwelle blockiert. Beim Abschalten wird zunächst die Drehzahl der Abtriebswelle 5 auf 0 reduziert und der Antriebsmotor 1 abgeschaltet, wobei der Regler 9 den Servomotor 10 synchron mit dem Drehzahlabfall der Welle 3 verlangsamt, so dass die Welle 5 stehen bleibt. Beim Einschalten wird umgekehrt zunächst der Regler 9 mit dem Servomotor 10 in Betrieb gesetzt und hierauf der Motor 1 eingeschaltet. Durch die Störgrössenaufschaltung läuft der Servomotor 9 synchron mit der Welle 3 hoch.

Um einen grossen Drehzahlbereich der Abtriebswelle 5 zu erreichen, ist der Durchmesser der Schnecke 7 mindestens halb so gross, vorzugsweise mindenstens so gross wie der Durchmesser des Schneckenrades 8. Dadurch wird eine für Schneckegetriebe ungewöhnlich kleine Untersetzung erreicht. Für eine gegebene Maximaldrehzahl des Servomotors 10 kann daher eine hohe Drehzahl der Welle 4 erreicht werden. Wenn die Drehzahl der Abtriebswelle 5 bis zum Stillstand abgeregelt werden soll, ist es zweckmässig, das Untersetzungsverhältnis zwischen Welle 3 und Welle 5 gleich zu wählen wie das Untersetzungsverhältnis zwischen Welle 19 und Welle 5. Die Motoren 1 und 10 haben dann gleiche Nenndrehzahlen.

Der beschriebene Antrieb hat eine sehr hohe Dynamik, weil für eine Drehzahländerung der Welle 5 nur die Drehzahl der Welle 4, des Schneckengetriebes 6 und des Servomotors 10 geändert werden muss, welche vergleichsweise geringe Massenträgheitsmomente haben. Im Gegensatz zu Leistungs-Servomotoren kann das Beschleunigungsvermögen hier sogar noch verbessert werden, wenn auf die Welle 3 ein Schwungrad 40 aufgesetzt wird.

Beim beschriebenen Antrieb ist das Drehmoment an der Eingangswelle 3 proportional zum Drehmoment an der Abtriebswelle 5 unabhängig von deren Drehzahl. Das Abtriebsdrehmoment kann deshalb unmittelbar durch die Stromaufnahme des Motors 1 gemessen werden. Dies ist insbesondere bei der Anwendung in Kranen und Aufzügen zur Ueberlastsicherung nützlich. Mit abnehmender Drehzahl der Abtriebswelle 5 sinkt auch der Wirkungsgrad. Beim Stillstand der Abtriebswelle 5 erreicht dieser den Wert 0. Dies ist auch so bei Leistungs-Servomotoren. Im Unterschied zu diesen wird die überschüssige Leistung nicht durch die Elektronik verheizt, sondern sie wirkt sich in einer Erwärmung des Getriebeöls aus. Die Abwärme kann aus diesem Grund einfach, betriebssicher und billig, z.B. durch einen Oelkühler, abgeführt werden. Die Wärmeabfuhr bei der Leistungselektronik stellt demgegenüber ein erhebliches Problem von stufenlosen Antrieben mit Hochleistungs-Servomotoren dar, unter anderem auch ein Sicherheitsrisiko.

Falls das Drehmoment der Abtriebswelle 5 in beiden Richtungen wirken soll, ist es zweckmässig, den Antriebsmotor 1 und den Servomotor 10 reversierbar auszubilden. Alternativ ist es auch möglich, ein Umkehrgetriebe zwischen Motor 1 und Welle 3 oder nach der Welle 5 anzuordnen. Statt des Servomotors 10 kann auch eine elektrisch, mechanisch, pneumatisch oder hydraulisch regelbare Bremse eingesetzt werden.

Bei der Ausführungsform nach Fig. 2 sind für gleiche Teile gleiche Bezugszeichen verwendet, so dass sich eine detaillierte Beschreibung des Getriebes 2 und des Schneckengetriebes 6 erübrigt. Das drehzahlregelbare Glied 10' ist hier als Reibradgetriebe ausgebildet umfassend zwei parallele, radial gegeneinander versetzte, drehbare Scheiben 50, 51 sowie ein Reibrad 52. Das Reibrad 52 rollt auf den beiden Scheiben 50, 51 ab und ist auf einer Stange 53 drehbar gelagert. Die Stange 53 ist senkrecht zu den beiden Wellen 54, 55 der Scheiben 50, 51 orientiert. Sie ist mittels eines Hubelementes 56 längs ihrer Achse verschiebbar. Die Scheibe 50 ist über ein Zahnrad 57 und einem Zahnriemen 58 mit der Antriebswelle 3 verbunden. Die Scheibe 51 ist über zwei Kegelräder 59, 60 mit der Welle 19 der Schnecke 7 verbunden. Durch Verschieben der Stange 53 kann die Uebersetzung des Reibradgetriebes 10' stufenlos geregelt werden. Im einfachsten Fall erfolgt die Verstellung der Stange 53 von Hand, wobei das Hubelement 56 z.B. eine Kurbel mit einer Mutter umfasst und die Stange 53 als Gewindestange ausgebildet ist und in die Mutter eingreift. Im dargestellten Fall ist das Hubelement 56 hingegen ein elektrisch, hydraulisch oder pneumatisch betätigter Stellmotor, der von einem Regler 61 angesteuert ist. Der Regler 61 hat einen Sollwerteingang 62. Der Istwert 33 wird wiederum durch den Geber 34 geliefert, der den Winkel und/oder Winkelgeschwindigkeit der Abtriebswelle 5 misst.

Statt des Reibradgetriebes 50, 51, 52 eignen sich auch andere stufenlos regelbare, mechanische Getriebe, z.B. Variatoren.

Im Betrieb arbeitet die Ausführungsform nach Fig. 2 analog jener nach Fig. 1. Auch hier wird über das stufenlose Getriebe 10′ bloss eine sehr geringe Leistung übertragen, so dass dieses leicht und preiswert hergestellt werden kann und eine hohe Dynamik aufweist. Der Motor 1 kann hier auch ein Verbrennungsmotor oder eine Dampf- oder Gasturbine sein.

Bei beiden dargestellten Ausführungsformen kann je nach Antriebsmotor 1, drehzahlregelbarem Glied 10, 10′ und Abtriebswellen-Nenndrehzahl die Funktion der Wellen 3, 4 und 5 untereinander vertauscht werden.

## Patentansprüche

1. Stufenlos regelbarer Antrieb umfassend einen Antriebsmotor (1), ein Differentialgetriebe (2) mit einer ersten und einer zweiten Eingangswelle (3,4) und einer Abtriebswelle (5), ein Schneckengetriebe (6) mit einer Schnecke (7) und einem Schneckenrad (8), sowie ein drehzahlregelbares Glied (10), wobei der Antriebsmotor (1) mit der ersten Eingangswelle (3), das Schneckenrad (8) mit der zweiten Eingangswelle (4) und die Schnecke (7) mit einer Ausgangswelle (19) des drehzahlregelbaren Gliedes (10) verbunden ist, wobei zur Erzielung kleiner Untersetzungen der Durchmesser der Schnecke (7) mindestens halb so gross ist wie der Durchmesser des Schneckenrades (8), dadurch gekennzeichnet, dass der Steigungswinkel der Schneckenzähne (20) 5° bis 9° beträgt, so dass das Schneckengetriebe (6) bei laufender Schnecke (7) gerade nicht selbsthemmend ist.

2. Antrieb nach Anspruch 1, dadurch gekennzeichnet, dass die Schnecke (7) einen grösseren Durchmesser hat als das Schneckenrad (8).

3. Antrieb nach Anspruch 1 oder 2, dadurch gekennzeichnet, dass das Differentialgetriebe (2) als Planetengetriebe ausgebildet ist.

4. Antrieb nach einem der Ansprüche 1 bis 3, dadurch gekennzeichnet, dass die Drehrichtung der ersten Eingangswelle (3) und der Schnecke (7) umkehrbar ist.

5. Antrieb nach einem der Ansprüche 1 bis 4, dadurch gekennzeichnet, dass das drehzahlregelbare Glied (10) ein Servomotor ist.

6. Antrieb nach Anspruch 5, dadurch gekennzeichnet, dass der Antriebsmotor (1) und der Servomotor (10) als Stoppmotoren ausgebildet sind.

7. Antrieb nach einem der Ansprüche 1 bis 4, dadurch gekennzeichnet, dass das drehzahlregelbare Glied (10′) ein stufenlos verstellbares mechanisches Getriebe (50,51,52) umfasst, das einerseits mit der ersten Eingangswelle (3) und andererseits mit der Schnecke (7) verbunden ist.

8. Antrieb nach einem der Ansprüche 1 bis 7, dadurch gekennzeichnet, dass mit der ersten Eingangswelle (3) ein Schwungrad (40) gekoppelt ist.

9. Antrieb nach einem der Ansprüche 1 bis 8, dadurch gekennzeichnet, dass der Eingang eines das drehzahlregelbare Glied (10) steuernden Reglers (9) mit einer Eingabe (32) für eine Führungsgrösse und mit einem mit der ersten Eingangswelle (3) gekoppelten Drehzahlmesser (25) verbunden ist.

10. Antrieb nach einem der Ansprüche 1 bis 9, dadurch gekennzeichnet, dass mit der Abtriebswelle (5) ein Geber (34) zum Messen des Winkels und/oder der Winkelgeschwindigkeit gekoppelt ist, dessen Ausgang (33) mit einem das drehzahlregelbare Glied (10) steuernden Regler (9,61) verbunden ist.

## Claims

1. A continuously variable drive comprising a drive motor (1), a differential gear (2) with a first and a second input shaft (3, 4) and a driven shaft (5), a worm gear (6) with a worm (7) and a worm wheel (8), as well as a rotationally controllable element (10), the drive motor (1) being connected to the first input shaft (3), the worm wheel (8) being connected to the second input shaft (4), and the worm (7) being connected to an output shaft (19) of the rotationally controllable element (10), whereby the diameter of the worm (7) is chosen to be at least half the size of the diameter of the worm wheel (8), characterised in that the pitch angle of the worm teeth (20) is 5° to 9° so that the worm gear (6) is just not self-locking when the worm (7) is running.

2. A drive according to Claim 1, characterised in that the worm (7) has a larger diameter than the worm wheel (8).

3. A drive according to either Claim 1 or 2, characterised in that the differential gear (2) is designed as a planetary gear.

4. A drive according to any one of Claims 1 to 3, characterised in that the direction of rotation of the first input shaft (3) and of the worm (7) is reversible.

5. A drive according to any one of Claims 1 to 4, characterised in that the rotationally controllable element (10) is a servo-motor.

6. A drive according to Claim 5, characterised in that the drive motor (1) and the servo-motor (10) are designed as stop motors.

7. A drive according to any one of Claims 1 to 4, characterised in that the rotationally controllable element (10′) comprises a continuously variable mechanical transmission (50, 51, 52) which is connected, on the one hand, to the first input shaft (3) and, on the other hand, to the worm (7).

8. A drive according to any one of Claims 1 to 7, characterised in that a flywheel (40) is coupled with the first input shaft (3).

9. A drive according to any one of Claims 1 to 8, characterised in that the input of a control (9) which regulates the rotationally controllable element (10) is connected to an input (32) for a guide variable and to a measuring device (25) for the rotational speed, this measuring device (25) being coupled to the first input shaft (3).

10. A drive according to any one of Claims 1 to 9, characterised in that a transducer (34) is coupled with the driven shaft (5), to measure the angle and/or the angular speed, the output (33) of said transducer (34) being connected to a control (9, 61) which regulates the rotationally controllable element (10).

**Revendications**

1. Entraînement à réglage continu, comprenant un moteur d'entraînement (1), un engrenage différentiel (2) comportant un premier et un second arbres d'entrée (3, 4) et un arbre de sortie (5), un engrenage à vis sans fin (6) comportant une vis sans fin (7) et une roue à denture hélicoïdale (8), ainsi qu'un organe à vitesse de rotation réglable (10), le moteur d'entraînement (1) étant relié au premier arbre d'entrée (3), la roue à denture hélicoïdale (8) au second arbre d'entrée (4) et la vis sans fin (7) à un arbre de sortie (19) de l'organe à vitesse de rotation réglable (10), le diamètre de la vis sans fin (7) étant au moins aussi grand que la moitié du diamètre de la roue à denture hélicoïdale (8) pour obtenir des rapports de transmission plus petits, caractérisé en ce que l'angle d'inclinaison des dents (20) de vis sans fin est compris entre 5° et 9°, de manière que l'engrenage à vis sans fin (6) soit pas juste autobloquant quand la vis sans fin (7) tourne.

2. Entraînement selon la revendication 1, caractérisé en ce que la vis sans fin (7) a un diamètre plus important que la roue à denture hélicoïdale (8).

3. Entraînement selon la revendication 1 ou 2, caractérisé en ce que l'engrenage différentiel (2) est constitué sous la forme d'un engrenage planétaire.

4. Entraînement selon l'une quelconque des revendications 1 à 3, caractérisé en ce que le sens de la rotation du premier arbre d'entrée (3) et de la vis sans fin (7) peut être inversé.

5. Entraînement selon l'une quelconque des revendications 1 à 4, caractérisé en ce que l'organe à vitesse de rotation réglable (10) est un servomoteur.

6. Entraînement selon la revendication 5, caractérisé en ce que le moteur d'entraînement (1) et le servomoteur (10) sont constitués sous forme de moteurs d'arrêt.

7. Entraînement selon l'une quelconque des revendications 1 à 4, caractérisé en ce que l'organe à vitesse variable (10′) comprend des engrenages mécaniques réglables (50, 51, 52) reliés d'une part au premier arbre d'entrée (3) et d'autre part à la vis sans fin (7).

8. Entraînement selon l'une quelconque des revendications 1 à 7, caractérisé en ce qu'un volant (40) est monté sur le premier arbre d'entrée (3).

9. Entraînement selon l'une quelconque des revendications 1 à 8, caractérisé en ce que l'entrée d'un régulateur (9) qui commande l'organe à vitesse variable (10) est relie à une entrée (32) destinée à une grandeur de référence et à un tachymètre (25) accouplé au premier arbre d'entrée (3).

10. Entraînement selon l'une quelconque des revendications 1 à 9, caractérisé en ce qu'un capteur (34) destiné à mesurer l'angle et/ou la vitesse angulaire est accouplé à l'arbre de sortie (5), capteur dont la sortie (33) est reliée à un régulateur (9, 61) commandant l'organe à vitesse de rotation variable (10).

FIG.1

FIG. 2